# EUROPÄISCHE PATENTSCHRIFT

(11) **EP 4 295 228 B1**
(45) Veröffentlichungstag und Bekanntmachung des Hinweises auf die Patenterteilung: **12.08.2026**
(21) Anmeldenummer: 22712884.0
(22) Anmeldetag: 01.03.2022
(51) Int. Cl.: G06F 9/48, H04L 12/403, H04L 67/62, G06F 11/18

(54) **DATENVERARBEITUNGSVERFAHREN**
DATA PROCESSING METHOD
PROCÉDÉ DE TRAITEMENT DE DONNÉES

(30) Priorität: 30.03.2021 DE 102021203221
(43) Veröffentlichungstag der Anmeldung: 27.12.2023
(73) Patentinhaber: Siemens Mobility GmbH, 80997 München (DE)
(72) Erfinder: MARTIN, Maximilian, 96155 Buttenheim (DE)
(74) Vertreter: Siemens Patent Attorneys
(86) Internationale Anmeldenummer: PCT/EP2022/055069
(87) Internationale Veröffentlichungsnummer: WO 2022/207213

(56) Entgegenhaltungen:
- CRACIUNAS SILVIU S ET AL: "Combined task- and network-level scheduling for distributed time-triggered systems", REAL TIME SYSTEMS, KLUWER ACADEMIC PUBLISHERS, DORDRECHT, NL, vol. 52, no. 2, 28 October 2015 (2015-10-28), pages 161 - 200, XP035933289, ISSN: 0922-6443, [retrieved on 20151028], DOI: 10.1007/S11241-015-9244-X
- LOVELESS ANDREW: "On Time-Triggered Ethernet in NASA's Lunar Gateway", AVIONICS ARCHITECTURES COMMUNITY OF PRACTICE, 30 July 2020 (2020-07-30), Johnson Space Center Houston, Texas, United States, XP055927909, Retrieved from the Internet <URL:https://ntrs.nasa.gov/api/citations/20205005104/downloads/2020-07-26-AA-CoP.pdf?attachment=true> [retrieved on 20220603]
- BAUER G ET AL: "Time-triggered architecture: a consistent computing platform", IEEE MICRO, IEEE SERVICE CENTER, LOS ALAMITOS, CA, US, vol. 22, no. 4, 1 July 2002 (2002-07-01), pages 36 - 45, XP011094710, ISSN: 0272-1732

## Beschreibung

Die Erfindung betrifft ein Datenverarbeitungsverfahren, ein System zur Durchführung des Datenverarbeitungsverfahrens sowie ein Computerprogrammprodukt.

Automatisierte industrielle Vorgänge erfordern computergestützte Datenverarbeitungsverfahren, welche hohen Sicherheitsanforderungen genügen müssen. Bereits ein einziger Fehler in einem solchen Datenverarbeitungsverfahren kann eine Unterbrechung des industriellen Vorgangs oder gar Sach- oder Personenschäden verursachen. In computergestützten Datenverarbeitungsverfahren können Fehler sowohl durch Hardware, durch Software als auch durch eine Datenübertragung entstehen. Zur Erkennung und Vermeidung von derartigen Fehlern sind bereits verschiedene Verfahren bekannt. Zur Erkennung und Vermeidung von hardwarebedingten Fehlern findet beispielsweise eine Verarbeitung von Daten auf redundant vorhandenen Hardwarebauteilen statt. Zum Beispiel wird ein Datenverarbeitungsprogramm mehrfach auf einem oder auf mehreren Kernen eines Prozessors eines Hardwarebauteils ausgeführt. Dies birgt den Nachteil, dass Rechenkapazitäten des Prozessors allein für eine redundante Ausführung des Datenverarbeitungsprogramms belegt werden. Zudem werden Datenverarbeitungsverfahren aufgrund von Verfahren zur Erkennung und Vermeidung von Fehlern je länger, desto besser und zuverlässiger ein Fehler erkannt und vermieden werden soll. Eine solche Verlängerung des Datenverarbeitungsverfahrenes steht jedoch einer möglichst schnellen Abarbeitung des Datenverarbeitungsverfahrens entgegen. Insbesondere werden an Steuerungsverfahren, welche auf ein Datenverarbeitungsverfahren zurückgreifen, hohe Anforderungen an eine möglichst schnelle Datenverarbeitung gestellt, um eine hohe Betriebszuverlässigkeit zu erreichen.

In dem Artikel "Combined task- and network-level scheduling for distributed time-triggered systems", der im Verlag Springer Science+Business Media New York 2015 verlegt ist, beschreiben die Autoren Silviu S. Craciunas und Ramon Serna Oliver sogenannte Ethernet-based time-trigered networks (TTEthernet).

In dem Foliensatz des NASA Johnson Space Center (NASA: National Aeronautics and Space Administration) mit dem Titel "On Time-Triggered Ethernet in NASA's Lunar Gateway" wird durch den Autoren Andrew Loveless von Time-Triggered Ethernet im Lunar Gateway der NASA berichtet.

In dem Artikel "Time Triggered Architecture: A Consistent Computing Platform", der in IEEE MICRO, IEEE SERVICE CENTER, LOS ALAMOS, CA, US, in Band 2, Nr. 4, verlegt ist, beschreiben die Autoren Reinhard Maier, Günther Bauer, Georg Stöger und Stefan Poledna eine zeitgetriggerte Architektur.

Die Aufgabe der Erfindung besteht darin, ein alternatives Datenverarbeitungsverfahren anzugeben, mit welchem zeiteffizient eine hohe Betriebssicherheit realisiert werden kann.

Diese Aufgabe wird gelöst durch ein Datenverarbeitungsverfahren mit den Merkmalen des Anspruch 1.

Des Weiteren liegt der Erfindung die Aufgabe zugrunde, ein System zur Durchführung des erfindungsgemäßen Datenverarbeitungsverfahrens anzugeben.

Diese Aufgabe wird gelöst durch ein System mit den Merkmalen des nebengeordneten Systemanspruchs.

Zudem liegt der Erfindung die Aufgabe zugrunde, ein Computerprogrammprodukt zur Durchführung des erfindungsgemäßen Datenverarbeitungsverfahrens mit dem erfindungsgemäßen System bereitzustellen.

Diese Aufgabe wird gelöst durch ein Computerprogrammprodukt mit den Merkmalen des nebengeordneten Computerprogrammproduktanspruchs.

Vorteilhafte Weiterbildungen der vorliegenden Erfindung können jeweils den abhängigen Unteransprüchen entnommen werden.

Bei dem erfindungsgemäßen Datenverarbeitungsverfahren werden Daten zwischen verschiedenen Netzwerkteilnehmern eines Netzwerks gemäß einem in einem Kommunikationsschema festgelegten Kommunikationszyklus aus aufeinanderfolgenden Zeitintervallen übertragen. Insbesondere werden die Daten zeitgesteuert übertragen. Vorzugsweise sind hierzu Zeiteinstellungen der Netzwerkteilnehmer gemäß eines gemeinsamen Taktsignals synchron aufeinander abgestimmt. Dies kann beispielsweise mittels eines dem Fachmann bekannten, sogenannten "Precision Time Protocol (PTP)" realisiert werden. Während zumindest eines Zeitintervalls des Kommunikationszyklus werden vorbestimmte Netzwerkteilnehmer jeweils entweder zum Senden oder zum Empfangen der Daten berechtigt. Der Kommunikationszyklus kann beispielsweise auf Basis eines Zeitmultiplexverfahrens realisiert werden. Das Zeitmultiplexverfahren ist auch unter der englischsprachigen Bezeichnung "Time Division Multiple Access" oder unter der davon abgeleiteten Abkürzung "TDMA" bekannt. Bevorzugt handelt es sich bei dem Zeitmultiplexverfahren um ein synchrones Zeitmultiplexverfahren. In dem synchronen Zeitmultiplexverfahren werden Zeitintervalle mit einer festen Zeitlänge vorgesehen. Während der genannten Zeitintervalle werden jeweils vorbestimmte Netzwerkteilnehmer zum Senden und weitere vorbestimmte Netzwerkteilnehmer zum Empfangen von Daten berechtigt. Auf diese Weise kann eine Kommunikation in einem Netzwerk einfach physikalisch geteilt werden. Des Weiteren kann hierdurch aufwandsgünstig eine Konvergenz mit weiteren Netzwerken erreicht werden.

Ferner ist es denkbar, dass die Daten gemäß einem gesicherten Übertragungsprotokoll übertragen werden. Hierbei kann es sich beispielsweise um ein Übertragungsprotokoll gemäß der Norm IEC 61784-3 handeln. Auf diese Weise kann eine Integrität der übertragenen Daten sichergestellt werden. Zudem können Sicherheitsanforderungen, welche an die Übertragung von Daten in einem Netzwerk gestellt werden, auf einfache Weise eingehalten werden.

In einer weiteren vorteilhaften Ausführungsvariante werden die Daten zwischen verschiedenen Netzwerkteilnehmern gemäß einem "publish/subscribe"-Protokoll übertragen. Hierzu können die Daten beispielsweise gemäß dem Standard "OPC UA PubSub" übertragen werden. Auf diese Weise kann auf eine Adressierung der Daten durch einen Sender verzichtet werden. Die Daten können so aufwandsgünstig von einem oder mehreren Sendern an einen oder mehrere den Sendern unbekannte Empfänger übertragen werden.

Vorzugsweise werden während eines Zeitintervalls des Kommunikationszyklus zumindest zwei vorbestimmte Netzwerkteilnehmer zur Übertragung von Daten berechtigt. Besonders bevorzugt wird in diesem einen Zeitintervall wenigstens einer der zumindest zwei vorbestimmten Netzwerkteilnehmer zum Senden berechtigt und wenigstens ein weiterer der zumindest zwei Netzwerkteilnehmer zum Empfangen berechtigt. So kann ein zuverlässiger Datenstrom von einem Sender zu einem Empfänger ermöglicht werden.

Des Weiteren werden in dem erfindungsgemäßen Datenverarbeitungsverfahren mehrere Datenverarbeitungsvorrichtungen als Netzwerkteilnehmer vorgesehen. Eine Datenverarbeitungsvorrichtung kann beispielsweise ein oder mehrere Mikroprozessoren, ein Computer oder eine andere dem Fachmann bekannte Vorrichtung zum Ausführen von maschinenlesbaren Anweisungen sein. Hierbei wird von jeder der mehreren Datenverarbeitungsvorrichtungen jeweils ein Prozesszyklus durchlaufen. In dem jeweiligen Prozesszyklus werden aufeinanderfolgende Prozessschritte ausgeführt, in welchen jeweils zumindest ein Teil der Daten entweder eingelesen, verarbeitet oder ausgegeben wird. Insbesondere entspricht der Prozesszyklus hierbei einem Grundschema nach dem Eingabe-Verarbeitung-Ausgabe-Prinzip. Eine Anordnung sowie eine Reihenfolge der einzelnen Prozessschritte kann hierbei beliebig sein.

Zudem wird bei dem erfindungsgemäßen Datenverarbeitungsverfahren der Kommunikationszyklus derart mit dem Prozesszyklus wenigstens einer der mehreren Datenverarbeitungsvorrichtungen synchronisiert, dass während eines zeitlichen Durchlaufens des Kommunikationszyklus ein vorbestimmter Prozessschritt des Prozesszyklus der wenigstens einen der mehreren Datenverarbeitungsvorrichtungen während eines diesem vorbestimmten Prozessschritt zugeordneten Zeitintervalls des Kommunikationszyklus ausgeführt wird. So wird ermöglicht, dass eine Dauer des Datenverarbeitungsverfahrens kurz gehalten werden kann. Die Dauer des Datenverarbeitungsverfahrens kann weitestgehend unabhängig von eine Anzahl an am Datenverarbeitungsverfahren beteiligten Netzwerkteilnehmern, insbesondere unabhängig von einer Anzahl an Datenverarbeitungsvorrichtungen, gehalten werden. Des Weiteren werden bei dem erfindungsgemäßen Datenverarbeitungsverfahren der Kommunikationszyklus sowie der Prozesszyklus der genannten wenigstens einen der mehreren Datenverarbeitungsvorrichtungen mehrfach durchlaufen.

Mittels des erfindungsgemäßen Datenverarbeitungsverfahrens kann ein Datenfluss zwischen Sender und Empfänger auf zuverlässige Weise zugordnet werden. Ferner kann erreicht werden, dass Daten von mehreren Netzwerkteilnehmern gleichzeitig empfangen, verarbeitet und/oder ausgegeben werden können. Mehrere Datenverarbeitungsvorrichtungen können parallel zueinander Prozesszyklen durchlaufen und dabei zeitgleich Prozessschritte ausführen. In Abhängigkeit der Prozessschritte kann ein Datenfluss zwischen vorbestimmten Sendern und vorbestimmten Empfängern eindeutig zugeordnet werden. Eine nachteilige Verlängerung des Datenverarbeitungsverfahrens mit einer zunehmenden Anzahl an Netzwerkteilnehmern, insbesondere Datenverarbeitungsvorrichtungen, kann so einfach verhindert werden.

Vorzugsweise werden der genannte Kommunikationszyklus sowie alle mit dem genannten Kommunikationszyklus synchronisierten Prozesszyklen der mehreren Datenverarbeitungsvorrichtungen mehrfach durchlaufen. Dies ermöglicht den Einsatz des Datenverarbeitungsverfahrens in zyklisch sich wiederholenden Verfahren, wie beispielsweise Steuerungsverfahren.

In einer vorteilhaften Weiterbildung des Datenverarbeitungsverfahrens wird vorgesehen, dass der vorbestimmte Prozessschritt des Prozesszyklus vollständig innerhalb des diesem vorbestimmten Prozessschritt zugeordneten Zeitintervalls des Kommunikationszyklus ausgeführt wird. Jeder Prozessschritt kann so eindeutig einem Zeitintervall zugeordnet werden. Dies ermöglicht es, einen Prozessschritt abzuschließen, bevor eine Änderung von Berechtigungen der Netzwerkteilnehmer in einem folgenden Zeitintervall eintritt. So können Fehler während der Übertragung von Daten, wie beispielsweise ein Verlust von zu übertragenden Daten, verhindert werden.

In einer vorteilhafte Ausführungsvariante der Weiterbildung wird vorgesehen, dass eine Dauer des vorbestimmten Zeitintervalls derart an eine Dauer des vorbestimmten Prozessschritts angepasst wird, dass die Dauer des vorbestimmten Zeitintervalls im Wesentlichen gleich lang ist wie die Dauer des vorbestimmten Prozessschritts. Zeitabschnitte des Kommunikationszyklus, während welchen keine Datenübertragung stattfindet, können auf diese Weise verhindert werden.

In einer weiteren vorteilhaften Weiterbildung wird vorgesehen, dass während eines Zeitintervalls erster Art des Kommunikationszyklus wenigstens eine der mehreren Datenverarbeitungsvorrichtungen zum Empfangen von Daten berechtigt wird. Während dieses Zeitintervalls erster Art werden von dieser wenigstens einen Datenverarbeitungsvorrichtung Eingabedaten eingelesen. Dies ermöglicht auf einfache Weise einen Datenfluss von einer Gruppe an Netzwerkteilnehmern hin zu wenigstens einer Datenverarbeitungsvorrichtung vorzubestimmen. Eingabedaten können beispielsweise von Sensoren erfasste Daten sein. Insbesondere können Eingabedaten Ist-Zustandsdaten eines zu steuernden Verfahrens sein.

In einer vorteilhaften Ausführungsvariante der zuvor genannten weiteren Weiterbildung wird vorgesehen, dass während des Zeitintervalls erster Art des Kommunikationszyklus die mehreren Datenverarbeitungsvorrichtungen zum Empfangen von Daten berechtigt werden. Des Weiteren werden hierbei während dieses Zeitintervalls erster Art von den mehreren Datenverarbeitungsvorrichtungen jeweils identische Eingabedaten eingelesen. Eine Dauer zum Einlesen von Eingabedaten ist auf diese Weise weitestgehend unabhängig von einer Gesamtanzahl an Datenverarbeitungsvorrichtungen.

Des Weiteren wird in einer vorteilhaften Weiterbildung vorgesehen, dass während eines Zeitintervalls zweiter Art des Kommunikationszyklus mittels wenigstens einer der mehreren Datenverarbeitungsvorrichtungen Eingabedaten zu einem Ausgabedatensatz verarbeitet werden. Auf diese Weise kann während des Zeitintervalls zweiter Art eine Übermittlung von Daten zwischen beliebigen Gruppen an Netzwerkteilnehmern erfolgen. So können freie Übertragungskapazitäten ausgenutzt werden. Insbesondere können innerhalb des Zeitintervalls zweiter Art beliebige Netzwerkteilnehmer zum Senden und weitere Netzwerkteilnehmer zum Empfangen berechtigt sein.

In einer vorteilhaften Ausführungsvariante der zuvor genannten Weiterbildung wird vorgesehen, dass während des Zeitintervalls zweiter Art mittels der wenigstens einen der mehreren Datenverarbeitungsvorrichtungen aus dem Ausgabedatensatz eine Prüfsumme berechnet wird. Anhand einer Prüfsumme kann ein Inhalt des Ausgabedatensatzes in zusammengefasster Form bereitgestellt werden. Insbesondere weisen Ausgabedatensätze mit demselben Inhalt dieselbe Prüfsumme auf.

In einer weiteren vorteilhaften Ausführungsvariante der zuvor genannten Weiterbildung wird vorgesehen, dass während des Zeitintervalls zweiter Art von jeder der mehreren Datenverarbeitungsvorrichtungen mittels jeweils desselben deterministischen Datenverarbeitungsprogramms die Eingabedaten zu einem Ausgabedatensatz verarbeitet werden. Unter einem deterministischen Datenverarbeitungsprogramm soll im vorliegenden Zusammenhang ein Programm verstanden werden, welches bei wiederholter Ausführung ausgehend von denselben Eingabedaten jedes Mal denselben Ausgabedatensatz berechnet. Abweichungen zwischen den Ausgabedaten, welche ausgehend von denselben Eingabedaten durch das deterministische Datenverarbeitungsprogramm berechnet wurden, können sich lediglich in hardwarebedingten Fehlern unterscheiden. Auf diese Weise kann eine beliebig skalierbare Anzahl an unabhängig voneinander berechneten Ausgabedatensätzen zeiteffizient, insbesondere gleichzeitig, erzeugt werden. Denkbar ist hierbei, dass das genannte Datenverarbeitungsprogramm zustandslos ist. Im Falle eines zustandslosen Datenverarbeitungsprogramms sind die Ausgabedatensätze allein von den Eingabedaten abhängig. Vorzugsweise wird während des Zeitintervalls zweiter Art von jeder der mehreren Datenverarbeitungsvorrichtungen aus dem Ausgabedatensatz eine Prüfsumme berechnet. Durch die Prüfsumme wird ein einfacher und schneller Vergleich der Ausgabedatensätze ermöglicht.

Ferner ist denkbar, dass zumindest ein Teil der mehreren Datenverarbeitungsvorrichtungen die Eingabedaten anstatt des genannten selben Datenverarbeitungsprogramms mittels eines zu dem genannten Datenverarbeitungsprogramm gleichen Datenverarbeitungsprogramms zu einem Ausgabedatensatz verarbeitet werden. Unter zwei gleichen Datenverarbeitungsprogrammen soll im vorliegenden Zusammenhang verstanden werden, dass beide Datenverarbeitungsprogramme ausgehend von denselben Eingabedaten auf unterschiedliche Weise dazu programmiert sind, denselben Ausgabedatensatz zu berechnen. Insbesondere sind gleiche Datenverarbeitungsprogramme diversitär programmiert. Ein Vergleich der Ausgabedatensätze der unterschiedlich programmierten Datenverarbeitungsprogramme ermöglicht es, neben den zuvor genannten zufälligen Fehlern zusätzlich systematische Fehler zu erkennen, welche auf Programmierfehlern basieren.

Eine andere vorteilhafte Weiterbildung sieht vor, dass während eines Zeitintervalls dritter Art des Kommunikationszyklus eine Übertragung von Daten ausschließlich auf eine Übertragung zwischen den mehreren Datenverarbeitungsvorrichtungen beschränkt ist. Hierdurch kann eine Ausgabe von möglicherweise fehlerbehafteten Ausgabedatensätzen auf eine Ausgabe an die mehreren Datenverarbeitungsvorrichtungen beschränkt werden. Ein Einfluss eines möglicherweise fehlerbehafteten Ausgabedatensatzes auf weitere Netzwerkteilnehmer kann so vermieden werden.

In einer vorteilhaften Ausführungsvariante wird vorgesehen, dass während des Zeitintervalls dritter Art allein eine erste Datenverarbeitungsvorrichtung der mehreren Datenverarbeitungsvorrichtungen zum Empfangen von Daten berechtigt ist und weitere Datenverarbeitungsvorrichtungen der mehren Datenverarbeitungsvorrichtungen zum Senden von Daten berechtigt sind. Während des Zeitintervalls dritter Art wird von den weiteren Datenverarbeitungsvorrichtungen jeweils ein Ausgabedatensatz ausgegeben, welcher mittels der ersten Datenverarbeitungsvorrichtung eingelesen wird. Dies ermöglicht eine zentrale und zeiteffiziente Datenverarbeitung mit genau einer Datenverarbeitungsvorrichtung.

In einer weiteren vorteilhaften Ausführungsvariante wird vorgesehen, dass während des Zeitintervalls dritter Art von den weiteren Datenverarbeitungsvorrichtungen jeweils die im Zeitintervall zweiter Art berechnete Prüfsumme ausgegeben wird. Hierbei wird diese Prüfsumme von einem Teil der weiteren Datenverarbeitungsvorrichtungen anstatt des Ausgabedatensatzes ausgegeben. Auf diese Weise kann eine Menge an zu übertragenden Daten im Netzwerk verringert werden und insbesondere das Zeitintervall dritter Art verkürzt werden.

In einer weiteren vorteilhaften Weiterbildung wird vorgesehen, dass während eines Zeitintervalls vierter Art des Kommunikationszyklus ausschließlich die erste Datenverarbeitungsvorrichtung zum Senden von Daten berechtigt ist. Während des Zeitintervalls vierter Art wird mittels der ersten Datenverarbeitungsvorrichtung deren eigener Ausgabedatensatz mit wenigstens einem eingelesenen Ausgabedatensatz verglichen. In einer vorteilhaften alternativen Ausführungsvariante wird während des Zeitintervalls vierter Art mittels der ersten Datenverarbeitungsvorrichtung eine Prüfsumme des eigenen Ausgabedatensatzes mit den eingelesenen Prüfsummen verglichen. Durch den Vergleich wird eine einfache und aufwandsgünstige Erkennung von zufälligen und/oder systematischen Fehlern in den Ausgabedatensätzen realisiert. Durch einen Vergleich von Prüfsummen anstatt von Ausgabedatensätzen kann das Zeitintervall vierter Art verkürzt werden.

Ferner sieht eine vorteilhafte Weiterbildung vor, dass im Falle einer Übereinstimmung des eigenen Ausgabedatensatzes mit dem wenigstens einen eingelesenen Ausgabedatensatz während des Zeitintervalls vierter Art der eigene Ausgabedatensatz von der ersten Datenverarbeitungsvorrichtung ausgegeben wird. Alternativ wird vorgesehen, dass im Falle einer Übereinstimmung der Prüfsumme des eigenen Ausgabedatensatzes mit den eingelesenen Prüfsummen während des Zeitintervalls vierter Art der eigene Ausgabedatensatz von der ersten Datenverarbeitungsvorrichtung ausgegeben wird. So kann auf einfache Weise eine Verifizierung des eigenen Ausgabedatensatzes mittels eines eingelesenen Ausgabedatensatzes oder der eingelesenen Prüfsummen aufwandsgünstig erfolgen. Ferner ist denkbar, dass ein eigenes Zeitintervall zur Ausgabe des Ausgabedatensatzes durch die erste Datenverarbeitungsvorrichtung vorgesehen wird. In einer vorteilhaften Ausführungsform ist während des Zeitintervalls vierter Art zumindest ein zum Empfang des Ausgabedatensatzes vorgesehener Netzwerkteilnehmer zum Empfangen des Ausgabedatensatzes berechtigt. Beispielsweise ist ein als Aktor ausgebildeter Netzwerkteilnehmer hierbei zum Empfangen des Ausgabedatensatzes berechtigt. Dies ermöglicht eine eindeutige Zuordnung des Datenflusses zwischen den Netzwerkteilnehmern.

Ferner sieht eine vorteilhafte Weiterbildung vor, dass im Falle einer Abweichung zwischen dem eigenen Ausgabedatensatz und einem eingelesenen Ausgabedatensatz während des Zeitintervalls vierter Art ein solcher Ausgabedatensatz von der ersten Datenverarbeitungsvorrichtung ausgegeben wird, welcher mit wenigstens einem weiteren eingelesenen Ausgabedatensatz übereinstimmt. Dies setzt allerdings voraus, dass im Zeitintervall dritter Art zumindest zwei Ausgabedatensätze mittels der ersten Datenverarbeitungsvorrichtung eingelesen werden. Sollte hingegen während des Zeitintervalls dritter Art lediglich ein Ausgabedatensatz mittels der ersten Datenverarbeitungsvorrichtung eingelesen werden, wird eine Ausgabe eines Ausgabedatensatzes mittels der ersten Datenverarbeitungsvorrichtung verhindert. Alternativ wird vorgesehen, dass im Falle einer Abweichung zwischen der Prüfsumme des eigenen Ausgabedatensatzes und zumindest einer Prüfsumme der eingelesenen Prüfsummen von der ersten Datenverarbeitungsvorrichtung während des Zeitintervalls vierter Art ein solcher Ausgabedatensatz ausgegeben wird, dessen Prüfsumme mit wenigstens einer weiteren Prüfsumme übereinstimmt. Im Falle des Vergleichs der Prüfsummen kann es ausreichend sein, mittels der ersten Datenverarbeitungsvorrichtung neben den Prüfsummen lediglich einen Ausgabedatensatz zumindest einer der weiteren Datenverarbeitungsvorrichtungen während des Zeitintervalls dritter Art einzulesen. Auf diese Weise ist eine einfache und zuverlässige Verifizierung von Ausgabedatensätzen möglich. Indem ein verifizierter Ausgabedatensatz einer weiteren Datenverarbeitungsvorrichtung ausgegeben wird, kann eine Unterbrechung des Datenverarbeitungsverfahrens verhindert werden.

Mittels des erfindungsgemäßen Systems kann das erfindungsgemäße Datenverarbeitungsverfahren durchgeführt werden.

Das erfindungsgemäße System weist ein Netzwerk auf, welches dazu eingerichtet ist, Daten zwischen verschiedenen Netzwerkteilnehmern des Netzwerks gemäß einem in einem Kommunikationsschema festgelegten Kommunikationszyklus aus aufeinanderfolgenden Zeitintervallen zu übertragen. Hierdurch sind vorbestimmte Netzwerkteilnehmer des Netzwerks während eines oder mehrerer vorbestimmter Zeitintervalle jeweils zum Senden oder zum Empfangen der Daten berechtigbar. Bei dem Kommunikationsschema, dem Kommunikationszyklus und den Zeitintervallen handelt es sich insbesondere um das Kommunikationsschema, den Kommunikationszyklus und die Zeitintervalle, welche jeweils bereits zuvor im Zusammenhang mit dem Datenverarbeitungsverfahren beschrieben wurden. Des Weiteren weist das erfindungsgemäße System mehrere Datenverarbeitungsvorrichtungen auf, welche jeweils als Netzwerkteilnehmer ausgebildet sind. Die Datenverarbeitungsvorrichtungen entsprechen hierbei insbesondere denen im Zusammenhang mit dem Datenverarbeitungsverfahren beschriebenen Datenverarbeitungsvorrichtungen. Die mehreren Datenverarbeitungsvorrichtungen sind jeweils dazu eingerichtet, zumindest einen Teil der Daten in einem Prozesszyklus aus aufeinanderfolgenden Prozessschritten einzulesen, zu verarbeiten und/oder auszugeben. Die Prozesszyklen sowie die zugehörigen Prozessschritte entsprechend hierbei insbesondere denen, im Zusammenhang mit dem Datenverarbeitungsverfahren zuvor beschriebenen Prozesszyklen sowie zugehörigen Prozessschritten. Zudem ist bei dem erfindungsgemäßen System der Kommunikationszyklus derart mit dem Prozesszyklus wenigstens einer der mehreren Datenverarbeitungsvorrichtungen synchronisiert, dass während eines zeitlichen Durchlaufens des Kommunikationszyklus ein vorbestimmter Prozessschritt des Prozesszyklus der wenigstens einen der mehreren Datenverarbeitungsvorrichtungen während eines diesem vorbestimmten Prozessschritt zugeordneten Zeitintervalls des Kommunikationszyklus ausführbar ist. Des Weiteren ist bei dem erfindungsgemäßen System ein mehrfaches Durchlaufen des Kommunikationszyklus und des Prozesszyklus der genannten wenigstens einen der mehreren Datenverarbeitungsvorrichtungen vorgesehen. Auf diese Weise kann ein System bereitgestellt werden, welches eine beliebige Skalierbarkeit im Hinblick auf eine Anzahl an Netzwerkteilnehmern bietet, ohne dass eine Dauer des Datenverarbeitungsverfahrens nachteilig verlängert wird.

In einer vorteilhaften Weiterbildung ist wenigstens ein Sensor als Netzwerkteilnehmer vorgesehen. Dies ermöglicht eine einfache Bereitstellung von Eingabedaten.

Eine weitere vorteilhafte Weiterbildung sieht vor, dass wenigstens ein Aktor als Netzwerkteilnehmer vorgesehen ist. Ein zu steuerndes System kann so schnell und zuverlässig auf Basis eines Ausgabedatensatzes in einen Soll-Zustand überführt werden.

Mittels des erfindungsgemäßen Computerprogrammprodukts kann das erfindungsgemäße System dazu veranlasst werden, das erfindungsgemäße Datenverarbeitungsverfahren auszuführen. Hierzu weist das Computerprogrammprodukt maschinenlesbare Anweisungen auf. Dies ermöglicht eine aufwandsgünstige Implementierung des Datenverarbeitungsverfahrens.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung eines Ausführungsbeispiels der Erfindung näher erläutert. Soweit zweckdienlich, werden in den Figuren dieselben Bezugszeichen für dieselben oder einander entsprechende Elemente der Erfindung verwendet. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Zudem können alle angegebenen Merkmale isoliert betrachtet und in geeigneter Weise mit den Merkmalen eines beliebigen Anspruchs kombiniert werden.

Es zeigen:
- FIG 1: eine Illustration eines Ausführungsbeispiels eines erfindungsgemäßen Datenverarbeitungsverfahrens und eine schematische Darstellung eines Ausführungsbeispiels eines erfindungsgemäßen Systems zur Durchführung des Datenverarbeitungsverfahrens;
- FIG 2: eine Illustration eines zeitlichen Durchlaufens des Ausführungsbeispiels des Datenverarbeitungsverfahrens.

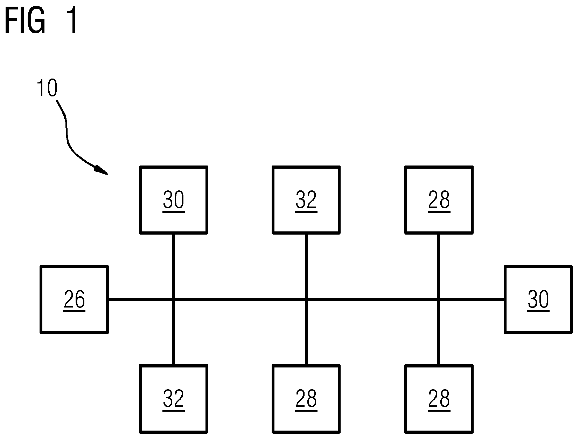

FIG 1 zeigt ein Ausführungsbeispiel eines Netzwerks 10. Das Ausführungsbeispiel ist hierbei schematisch als eine logische Topologie dargestellt. Eine physikalische Topologie des Netzwerks 10 kann von der in FIG 1 gezeigten logischen Topologie abweichen. Des Weiteren illustriert FIG 1 ein Ausführungsbeispiel eines Datenverarbeitungsverfahrens, welches Ist-Zustandsdaten eines zu steuernden Verfahrens zu Soll-Zustandsdaten des zu steuernden Verfahrens verarbeitet. Das Netzwerk 10 kann grundsätzlich eine beliebige Anzahl an Netzwerkteilnehmern aufweisen. In FIG 1 und der folgenden Beschreibung werden aus Gründen der Übersichtlichkeit lediglich diejenigen Netzwerkteilnehmer beschrieben und dargestellt, welche für eine Beschreibung des folgenden Ausführungsbeispiels relevant sind.

Im vorliegenden Ausführungsbeispiel sind als Netzwerkteilnehmer des Netzwerks 10 eine erste Datenverarbeitungsvorrichtung 26, drei weitere Datenverarbeitungsvorrichtungen 28, zwei Sensoren 30 sowie zwei Aktoren 32 vorgesehen. Die beiden Sensoren 30 sind jeweils dazu eingerichtet, Ist-Zustandsdaten des zu steuernden Verfahrens zu erfassen. Die beiden Aktoren 32 sind jeweils dazu eingerichtet, Soll-Zustandsdaten des zu steuernden Verfahrens zu empfangen. Auf Basis dieser Soll-Zustandsdaten wird im vorliegenden Ausführungsbeispiel mittels der zwei Aktoren 32 das zu steuernde Verfahren von einem Ist-Zustand in einen Soll-Zustand überführt. Des Weiteren werden im vorliegenden Ausführungsbeispiel die Soll-Zustandsdaten mittels eines deterministischen Datenverarbeitungsprogramms auf Basis der Ist-Zustandsdaten berechnet. Dasselbe deterministische Datenverarbeitungsprogramm wird sowohl von der ersten Datenverarbeitungsvorrichtung 26 als auch von den drei weiteren Datenverarbeitungsvorrichtungen 28 ausgeführt.

In dem Netzwerk 10 sind Daten zwischen den verschiedenen Netzwerkteilnehmern übertragbar. Die Daten werden in dem vorliegenden Ausführungsbeispiel gemäß einem in einem Kommunikationsschema 12 festgelegten Kommunikationszyklus 14 übertragen. Der Kommunikationszyklus 14 wird im vorliegenden Ausführungsbeispiel gemäß einem synchronen Zeitmultiplexverfahrens realisiert. Dieses kann beispielsweise mittels des Standards "IEEE 802.1Qbv" implementiert werden. Hierzu sind Zeiteinstellungen der Netzwerkteilnehmer gemäß eines gemeinsamen Taktsignals synchron aufeinander abgestimmt. Die Zeiteinstellungen der Netzwerkteilnehmer können beispielsweise mittels eines sogenannten "Precision Time Protocol (PTP)" aufeinander abgestimmt werden. Des Weiteren erfolgt die Übertragung der Daten zwischen den Netzwerkteilnehmern auf Basis eines "publish/subscribe"-Protokolls. Beispielsweise kann hierzu der Standard "OPC UA PubSub" als "publish/subscribe"- Protokoll verwendet werden. Zudem werden im vorliegenden Ausführungsbeispiel die Daten gemäß eines gesicherten Übertragungsprotokolls zwischen den Netzwerkteilnehmern übertragen.

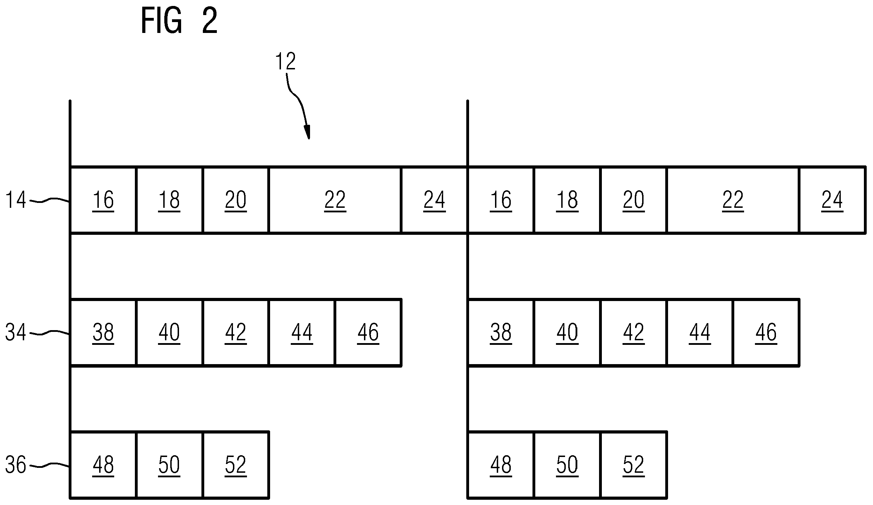

FIG 2 illustriert ein zeitliches Durchlaufen des Ausführungsbeispiels des Datenverarbeitungsverfahrens. Der Kommunikationszyklus 14 besteht im vorliegenden Ausführungsbeispiel aus fünf aufeinanderfolgenden Zeitintervallen 16, 18, 20, 22, 24, welche jeweils gemäß dem synchronen Zeitmultiplexverfahren eine feste Zeitlänge aufweisen. Die Zeitlängen der Zeitintervalle 16, 18, 20, 22, 24 können unterschiedlich lang sein. In dem Kommunikationsschema 12 wird festgelegt, welche Netzwerkteilnehmer in welchem Zeitintervall zum Senden oder zum Empfangen von Daten berechtigt werden. Des Weiteren illustriert FIG 2 einen ersten Prozesszyklus 34, welcher von der ersten Datenverarbeitungsvorrichtung 26 durchlaufen wird. Der erste Prozesszyklus 34 weist fünf aufeinanderfolgende Prozessschritte 38, 40, 42, 44, 46 auf. Zudem illustriert FIG 2 einen weiteren Prozesszyklus 36. Der weitere Prozesszyklus 36 wird von jeder der drei weiteren Datenverarbeitungsvorrichtungen 28 durchlaufen. Ferner weist der weitere Prozesszyklus 36 im vorliegenden Ausführungsbeispiel drei aufeinanderfolgende Prozessschritte 48, 50, 52 auf.

Der Kommunikationszyklus 14 wird derart mit dem ersten Prozesszyklus 34 und dem weiteren Prozesszyklus 36 synchronisiert, dass während eines zeitlichen Durchlaufens des Kommunikationszyklus 14 jeder Prozessschritt 38, 40, 42, 44, 46 des ersten Prozesszyklus 34 sowie jeder Prozessschritt 48, 50, 52 des weiteren Prozesszyklus 36 während genau eines den jeweiligen Prozessschritten 38, 40, 42, 44, 46, 48, 50, 52 zugeordneten Zeitintervalls 16, 18, 20, 22 des Kommunikationszyklus 14 vollständig ausgeführt wird. Zudem weisen im vorliegenden Ausführungsbeispiel der Kommunikationszyklus 14, der erste Prozesszyklus 34 sowie der weitere Prozesszyklus 36 denselben Startzeitpunkt auf.

Im vorliegenden Ausführungsbeispiel werden während eines ersten Zeitintervalls 16 des Kommunikationszyklus 14 sowohl die erste Datenverarbeitungsvorrichtung 26 als auch die drei weiteren Datenverarbeitungsvorrichtungen 28 zum Empfangen von Daten berechtigt. Zudem werden in dem ersten Zeitintervall 16 die beiden Sensoren 30 zum Senden von Daten berechtigt. Dies ermöglicht der ersten Datenverarbeitungsvorrichtung 26 in einem ersten Prozessschritt 38 des ersten Prozesszyklus 34 sowie den drei weiteren Datenverarbeitungsvorrichtungen 28 in einem ersten Prozessschritt 48 des weiteren Prozesszyklus 36 die durch die beiden Sensoren 30 bereitgestellten Ist-Zustandsdaten des zu steuernden Verfahrens als Eingabedaten einzulesen. Diese Eingabedaten werden hierbei mittels der ersten Datenverarbeitungsvorrichtung 26 und den drei weiteren Datenverarbeitungsvorrichtungen 28 gleichzeitig eingelesen. Während des ersten Zeitintervalls 16 werden die Eingabedaten vollständig durch die genannten Datenverarbeitungsvorrichtungen 26, 28 eingelesen. Unabhängig vom vorliegenden Ausführungsbeispiel ist hierbei eine beliebige Anzahl an Datenverarbeitungsvorrichtungen als Netzwerkteilnehmer vorstellbar, durch welche ohne eine zeitliche Verlängerung des Datenverarbeitungsverfahrens dieselben Eingabedaten verarbeitbar sind.

Während eines zweiten Zeitintervalls 18 werden gleichzeitig ein zweiter Prozessschritt 40 des ersten Prozesszyklus 34 sowie ein zweiter Prozessschritt 50 des weiteren Prozesszyklus 36 ausgeführt. Hierbei werden von der ersten Datenverarbeitungsvorrichtung 26 und den drei weiteren Datenverarbeitungsvorrichtungen 28 mittels jeweils desselben deterministischen Datenverarbeitungsprogramms die Eingabedaten zu jeweils einem Ausgabedatensatz vollständig verarbeitet. Alternativ oder zusätzlich ist hierbei denkbar, dass wenigstens eine der drei weiteren Datenverarbeitungsvorrichtungen 28 und/oder zumindest eine zusätzliche, nicht näher dargestellte Datenverarbeitungsvorrichtung anstatt desselben Datenverarbeitungsprogramms ein anderes Datenverarbeitungsprogramm vollständig während des zweiten Zeitintervalls 18 ausführt. Das andere Datenverarbeitungsprogramm würde sich hierbei lediglich darin von den zuvor genannten Datenverarbeitungsprogrammen unterscheiden, dass es auf eine andere Weise dazu programmiert ist, auf Basis derselben Eingabedaten denselben Ausgabedatensatz wie die zuvor genannten Datenverarbeitungsprogramme zu berechnen. Eine Abweichung zwischen den Ausgabedatensätzen, welche von einem Datenverarbeitungsprogramm derselben Datenverarbeitungsprogramme berechnet wurde und des Ausgabedatensatzes, welcher von dem anderen Datenverarbeitungsprogramm berechnet wurde, kann daher sowohl auf Programmierfehlern als auch auf zufälligen, hardwarebedingten Fehlern basieren. Der Ausgabedatensatz weist im vorliegenden Ausführungsbeispiel die Soll-Zustandsdaten auf. Zudem werden während des zweiten Zeitintervalls 18 Prüfsummen aus den jeweiligen Ausgabedatensätzen gebildet. Für inhaltlich gleiche Ausgabedatensätze ergeben sich entsprechend dieselben Prüfsummen. Weichen die Prüfsummen voneinander ab, so weicht auch ein Inhalt der Ausgabedatensätze voneinander ab. Während des zweiten Zeitintervalls 18 können beliebige Netzwerkteilnehmer zum Senden und beliebige weitere Netzwerkteilnehmer zum Empfangen von Daten berechtigt werden. Hierbei kann es sich insbesondere um nicht näher im Zusammenhang mit diesem Ausführungsbeispiel dargestellte oder beschriebene Netzwerkteilnehmer des Netzwerks 10 handeln.

Auf das zweite Zeitintervall 18 des Kommunikationszyklus 14 folgt ein drittes Zeitintervall 20 des Kommunikationszyklus 14. Während des dritten Zeitintervalls 20 ist eine Übertragung von Daten ausschließlich auf eine Übertragung zwischen der ersten Datenverarbeitungsvorrichtung 26 und den drei weiteren Datenverarbeitungsvorrichtungen 28 beschränkt. Hierbei ist die erste Datenverarbeitungsvorrichtung 26 zum Empfangen von Daten berechtigt und die drei weiteren Datenverarbeitungsvorrichtungen 28 sind jeweils zum Senden von Daten berechtigt. Während des dritten Zeitintervalls 20 wird mittels der drei weiteren Datenverarbeitungsvorrichtungen 28 jeweils ein dritter Prozessschritt 52 des weiteren Prozesszyklus 36 vollständig ausgeführt. Hierbei wird im vorliegenden Ausführungsbeispiel von einer der drei weiteren Datenverarbeitungsvorrichtungen 28 sowohl der berechnete Ausgabedatensatz als auch eine Prüfsumme desselben ausgegeben. Von den übrigen zwei der drei weiteren Datenverarbeitungsvorrichtungen 28 wird in diesem dritten Prozessschritt 52 lediglich eine Prüfsumme der jeweilig berechneten Ausgabedatensätze ausgegeben. Zudem wird während des dritten Zeitintervalls 20 mittels der ersten Datenverarbeitungsvorrichtung 26 ein dritter Prozessschritt 42 des ersten Prozesszyklus 34 ausgeführt. In diesem dritten Prozessschritt 42 des ersten Prozesszyklus 34 werden mittels der ersten Datenverarbeitungsvorrichtung 26 die mittels der drei weiteren Datenverarbeitungsvorrichtungen 28 ausgegebenen Daten eingelesen. Indem die Übertragung von Daten während des dritten Zeitintervalls 20 ausschließlich auf eine Übertragung zwischen der ersten Datenverarbeitungsvorrichtung 26 und den drei weiteren Datenverarbeitungsvorrichtungen 28 beschränkt wird, kann ausgeschlossen werden, dass fälschlicherweise der mittels der genannten einen der drei weiteren Datenverarbeitungsvorrichtungen 28 ausgegebene Ausgabedatensatz versehentlich an die Aktoren 32 ausgegeben werden kann.

Während eines vierten Zeitintervalls 22 des Kommunikationszyklus 14 wird ausschließlich die erste Datenverarbeitungsvorrichtung 26 zum Senden von Daten berechtigt. Zum Empfangen von Daten werden in dem vierten Zeitintervall 22 die zwei Aktoren 32 berechtigt. Während des vierten Zeitintervalls 22 wird sowohl ein vierter Prozessschritt 44 des ersten Prozesszyklus 34 als auch ein fünfter Prozessschritt 46 des ersten Prozesszyklus 34 vollständig ausgeführt. Alternativ wäre hierbei denkbar, dass dem vierten Prozessschritt 44 und dem fünften Prozessschritt 46 jeweils ein eigenes Zeitintervall zugeordnet wird, in welchem die jeweiligen Prozessschritte vollständig ausführbar sind. In dem vierten Prozessschritt 44 wird von der ersten Datenverarbeitungsvorrichtung 26 eine Prüfsumme des eigenen Ausgabedatensatzes mit den denen im vorhergehenden dritten Prozessschritt 42 des ersten Prozesszyklus 34 eingelesenen Prüfsummen miteinander verglichen.

Im Falle einer Übereinstimmung der Prüfsumme des eigenen Ausgabedatensatzes mit den jeweiligen eingelesenen Prüfsummen, wird in dem fünften Prozessschritt 46 des ersten Prozesszyklus 34 während des vierten Zeitintervalls 22 der eigene Ausgabedatensatz von der ersten Datenverarbeitungsvorrichtung 26 ausgegeben.

Im Falle einer Abweichung zwischen der Prüfsumme des eigenen Ausgabedatensatzes und wenigstens einer der eingelesenen Prüfsummen, wird von der ersten Datenverarbeitungsvorrichtung 26 ein verifizierter Ausgabedatensatz ausgegeben. Hierzu ermittelt die erste Datenverarbeitungsvorrichtung 26, welche der Prüfsummen von den übrigen Prüfsummen abweicht. Sofern sich die eigene Prüfsumme als einzige von den eingelesenen Prüfsummen unterscheidet, wird in dem fünften Prozessschritt 46 der im dritten Prozessschritt 42 eingelesene Ausgabedatensatz ausgegeben. Sollte sich jedoch eine der eingelesenen Prüfsummen von der eigenen und den zwei weiteren eingelesenen Prüfsummen unterscheiden, so wird in dem fünften Prozessschritt 46 wiederum der eigene Ausgabedatensatzes ausgegeben.

Dieses Vorgehen ermöglicht eine einfache Verifizierung der Ausgabedatensätze. Alternativ kann im Falle einer Abweichung zwischen den Prüfsummen entweder von einer Ausgabe eines Ausgabedatensatzes abgesehen werden oder das Datenverarbeitungsverfahren kann abgebrochen werden. Beispielsweise kann das zu steuernde Verfahren in einen gesicherten Zustand verbracht werden, in welchem das zu steuernde Verfahren unterbrochen wird.

Zuletzt weist der Kommunikationszyklus 14 im vorliegenden Ausführungsbeispiel ein fünftes Zeitintervall 24 auf. Diesem fünften Zeitintervall 24 ist kein Prozessschritt der genannten Prozesszyklen 34, 36 zugeordnet. Während des fünften Zeitintervalls 24 können beliebige Netzwerkteilnehmer zum Senden und weitere beliebige Netzwerkteilnehmer zum Empfangen von Daten berechtigt sein.

Ferner illustriert FIG 2, dass der Kommunikationszyklus 14, der erste Prozesszyklus 34 sowie der weitere Prozesszyklus 36 mehrfach durchlaufen werden. Hierbei werden der Kommunikationszyklus 14, der erste Prozesszyklus 34 sowie der weitere Prozesszyklus 36 jedes Mal synchronisiert durchlaufen. Dies wird im vorliegenden Ausführungsbeispiel dadurch erreicht, dass die Startzeitpunkte des Kommunikationszyklus 14, des ersten Prozesszyklus 34 sowie des weiteren Prozesszyklus 36 zu Beginn eines erneuten Durchlaufens jeweils miteinander übereinstimmen.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Datenverarbeitungsverfahren, bei welchem
- Daten zwischen verschiedenen Netzwerkteilnehmern eines Netzwerks (10) gemäß einem in einem Kommunikationsschema (12) festgelegten Kommunikationszyklus (14) aus aufeinanderfolgenden Zeitintervallen (16, 18, 20, 22, 24) übertragen werden;
- während zumindest eines Zeitintervalls (16, 18, 20, 22, 24) des Kommunikationszyklus (14) vorbestimmte Netzwerkteilnehmer jeweils entweder zum Senden oder zum Empfangen der Daten berechtigt werden;
- mehrere Datenverarbeitungsvorrichtungen (26, 28) als Netzwerkteilnehmer vorgesehen werden;
- von jeder der mehreren Datenverarbeitungsvorrichtungen (26, 28) jeweils ein Prozesszyklus (34, 36) durchlaufen wird;
- in dem jeweiligen Prozesszyklus (34, 36) aufeinanderfolgende Prozessschritte (38, 40, 42, 44, 46, 48, 50, 52) ausgeführt werden, in welchen jeweils zumindest ein Teil der Daten entweder eingelesen, verarbeitet oder ausgegeben wird;
- der Kommunikationszyklus (14) derart mit dem Prozesszyklus (34, 36) wenigstens einer der mehreren Datenverarbeitungsvorrichtungen (26, 28) synchronisiert wird, dass während eines zeitlichen Durchlaufens des Kommunikationszyklus (14) ein vorbestimmter Prozessschritt (38, 40, 42, 44, 46, 48, 50, 52) des Prozesszyklus (34, 36) der wenigstens einen der mehreren Datenverarbeitungsvorrichtungen (26, 28) während eines diesem vorbestimmten Prozessschritt (38, 40, 42, 44, 46, 48, 50, 52) zugeordneten Zeitintervalls (16, 18, 20, 22) des Kommunikationszyklus (14) ausgeführt wird; und
- der Kommunikationszyklus (14) sowie der Prozesszyklus (34, 36) der genannten wenigstens einen der mehreren Datenverarbeitungsvorrichtungen (26, 28) mehrfach durchlaufen werden.

2. Datenverarbeitungsverfahren nach Anspruch 1,
**dadurch gekennzeichnet, dass** der vorbestimmte Prozessschritt (38, 40, 42, 44, 46, 48, 50, 52) des Prozesszyklus (34, 36) vollständig innerhalb des diesem vorbestimmten Prozessschritt (38, 40, 42, 44, 46, 48, 50, 52) zugeordneten Zeitintervalls (16, 18, 20, 22) des Kommunikationszyklus (14) ausgeführt wird.

3. Datenverarbeitungsverfahren nach Anspruch 1 oder 2, **dadurch gekennzeichnet, dass**
- während eines Zeitintervalls (16) erster Art des Kommunikationszyklus (14) wenigstens eine der mehreren Datenverarbeitungsvorrichtungen (26, 28) zum Empfangen von Daten berechtigt ist; und
- während dieses Zeitintervalls (16) erster Art von dieser wenigstens einen Datenverarbeitungsvorrichtung (26, 28) Eingabedaten eingelesen werden.

4. Datenverarbeitungsverfahren nach Anspruch 3,
**dadurch gekennzeichnet, dass**
- während des Zeitintervalls (16) erster Art des Kommunikationszyklus (14) die mehreren Datenverarbeitungsvorrichtungen (26, 28) zum Empfangen von Daten berechtigt werden; und
- während dieses Zeitintervalls (16) erster Art von den mehreren Datenverarbeitungsvorrichtungen (26, 28) jeweils identische Eingabedaten eingelesen werden.

5. Datenverarbeitungsverfahren nach einem der vorherigen Ansprüche,
**dadurch gekennzeichnet, dass** während eines Zeitintervalls (18) zweiter Art des Kommunikationszyklus (14) mittels wenigstens einer der mehreren Datenverarbeitungsvorrichtungen (26, 28) Eingabedaten zu einem Ausgabedatensatz verarbeitet werden.

6. Datenverarbeitungsverfahren nach Anspruch 5,
**dadurch gekennzeichnet, dass** während dieses Zeitintervalls (18) zweiter Art von jeder der mehreren Datenverarbeitungsvorrichtungen (26, 28) mittels jeweils desselben deterministischen Datenverarbeitungsprogramms die Eingabedaten zu einem Ausgabedatensatz verarbeitet werden.

7. Datenverarbeitungsverfahren nach einem der vorherigen Ansprüche,
**dadurch gekennzeichnet, dass** während eines Zeitintervalls (20) dritter Art des Kommunikationszyklus (14) eine Übertragung von Daten ausschließlich auf eine Übertragung zwischen den mehreren Datenverarbeitungsvorrichtungen (26, 28) beschränkt ist.

8. Datenverarbeitungsverfahren nach den Ansprüchen 6 und 7, **dadurch gekennzeichnet, dass**
- während des Zeitintervalls (20) dritter Art allein eine erste Datenverarbeitungsvorrichtung (26) der mehreren Datenverarbeitungsvorrichtungen (26, 28) zum Empfangen von Daten berechtigt ist und weitere Datenverarbeitungsvorrichtungen (28) der mehreren Datenverarbeitungsvorrichtungen (26, 28) zum Senden von Daten berechtigt sind; und
- während des Zeitintervalls (20) dritter Art von den weiteren Datenverarbeitungsvorrichtungen (26, 28) jeweils ein Ausgabedatensatz ausgegeben wird, welcher mittels der ersten Datenverarbeitungsvorrichtung (26) eingelesen wird.

9. Datenverarbeitungsverfahren nach den Ansprüchen 6 und 8, **dadurch gekennzeichnet, dass**
- während des Zeitintervalls (18) zweiter Art mittels der weiteren Datenverarbeitungsvorrichtungen (28) jeweils eine Prüfsumme aus deren Ausgabedatensatz berechnet wird; und
- während des Zeitintervalls (20) dritter Art mittels der weiteren Datenverarbeitungsvorrichtungen (28) jeweils diese Prüfsumme ausgegeben wird, wobei diese Prüfsumme von einem Teil der weiteren Datenverarbeitungsvorrichtungen (28) anstatt des Ausgabedatensatzes ausgegeben wird.

10. Datenverarbeitungsverfahren nach Anspruch 9,
**dadurch gekennzeichnet, dass**
- während eines Zeitintervalls (22) vierter Art des Kommunikationszyklus (14) ausschließlich die erste Datenverarbeitungsvorrichtung (26) zum Senden von Daten berechtigt ist; und
- während des Zeitintervalls (22) vierter Art mittels der ersten Datenverarbeitungsvorrichtung (26) deren eigener Ausgabedatensatz mit wenigstens einem eingelesenen Ausgabedatensatz oder eine Prüfsumme des eigenen Ausgabedatensatzes mit den eingelesenen Prüfsummen verglichen wird.

11. Datenverarbeitungsverfahren nach Anspruch 10,
**dadurch gekennzeichnet, dass**
im Falle einer Übereinstimmung des eigenen Ausgabedatensatzes mit dem wenigstens einen eingelesenen Ausgabedatensatz oder im Falle einer Übereinstimmung der Prüfsumme des eigenen Ausgabedatensatzes mit den eingelesenen Prüfsummen während des Zeitintervalls (22) vierter Art der eigene Ausgabedatensatz von der ersten Datenverarbeitungsvorrichtung (26) ausgegeben wird.

12. Datenverarbeitungsverfahren nach Anspruch 10,
**dadurch gekennzeichnet, dass** im Falle einer Abweichung zwischen dem eigenen Ausgabedatensatz und einem eingelesenen Ausgabedatensatz oder im Falle einer Abweichung zwischen der Prüfsumme des eigenen Ausgabedatensatzes und einer Prüfsumme der eingelesenen Prüfsummen, ein solcher Ausgabedatensatz von der ersten Datenverarbeitungsvorrichtung (26) ausgegeben wird, welcher mit wenigstens einem weiteren eingelesenen Ausgabedatensatz übereinstimmt oder dessen Prüfsumme mit wenigstens einer weiteren Prüfsumme übereinstimmt.

13. System zur Durchführung des Datenverarbeitungsverfahrens nach einem der vorherigen Ansprüche, aufweisend
- ein Netzwerk (10), welches dazu eingerichtet ist, Daten zwischen verschiedenen Netzwerkteilnehmern des Netzwerks gemäß einem in einem Kommunikationsschema (12) festgelegten Kommunikationszyklus (14) aus aufeinanderfolgenden Zeitintervallen (16, 18, 20, 22, 24) zu übertragen;
- mehrere Datenverarbeitungsvorrichtungen (26, 28), welche jeweils als Netzwerkteilnehmer ausgebildet sind und welche jeweils dazu eingerichtet sind, zumindest einen Teil der Daten in einem Prozesszyklus (34, 36) aus aufeinanderfolgenden Prozessschritten (38, 40, 42, 44, 46, 48, 50, 52) einzulesen, zu verarbeiten und/oder auszugeben;
bei welchem
- vorbestimmte Netzwerkteilnehmer des Netzwerks (10) während eines oder mehrerer vorbestimmter Zeitintervalle (16, 18, 20, 22, 24) jeweils zum Senden oder zum Empfangen der Daten berechtigbar sind;
- der Kommunikationszyklus (14) derart mit dem Prozesszyklus (34, 36) wenigstes einer der mehreren Datenverarbeitungsvorrichtungen (26, 28) synchronisiert ist, dass während eines zeitlichen Durchlaufens des Kommunikationszyklus (14) ein vorbestimmter Prozessschritt (38, 40, 42, 44, 46, 48, 50, 52) des Prozesszyklus (34, 36) der wenigstes einen der mehreren Datenverarbeitungsvorrichtungen (26, 28) während eines diesem vorbestimmten Prozessschritt (38, 40, 42, 44, 46, 48, 50, 52) zugeordneten Zeitintervalls (16, 18, 20, 22) des Kommunikationszyklus (14) ausführbar ist; und
- ein mehrfaches Durchlaufen des Kommunikationszyklus (14) und des Prozesszyklus (34, 36) der genannten wenigstens einen der mehreren Datenverarbeitungsvorrichtungen (26, 28) vorgesehen ist.

14. Computerprogrammprodukt, enthaltend maschinenlesbare Anweisungen, welche das System gemäß Anspruch 13 dazu veranlasst, ein Datenverarbeitungsverfahren nach einem der Ansprüche 1 bis 12 auszuführen.

## Claims

1. Data processing method, in which
- data is transmitted between various network subscribers of a network (10) in accordance with a communication cycle (14) consisting of consecutive time intervals (16, 18, 20, 22, 24) defined in a communication scheme (12);
- during at least one time interval (16, 18, 20, 22, 24) of the communication cycle (14) predefined network subscribers are authorised either to send or to receive the data in each case;
- a plurality of data processing apparatuses (26, 28) are provided as network subscribers;
- a process cycle (34, 36) is executed by each of the plurality of data processing apparatuses (26, 28);
- consecutive process steps (38, 40, 42, 44, 46, 48, 50, 52) are carried out in the respective process cycle (34, 36), in which at least a part of the data is either read in, processed or output in each case;
- the communication cycle (14) is synchronised with the process cycle (34, 36) of at least one of the plurality of data processing apparatuses (26, 28) in such a way that, during an execution time of the communication cycle (14), a predefined process step (38, 40, 42, 44, 46, 48, 50, 52) of the process cycle (34, 36) of the at least one of the plurality of data processing apparatuses (26, 28) is carried out during a time interval (16, 18, 20, 22) of the communication cycle (14) assigned to this predefined process step (38, 40, 42, 44, 46, 48, 50, 52); and
- the communication cycle (14) and also the process cycle (34, 36) of the said at least one of the plurality of data processing apparatuses (26, 28) are executed multiple times.

2. Data processing method according to claim 1, **characterised in that** the predefined process step (38, 40, 42, 44, 46, 48, 50, 52) of the process cycle (34, 36) is carried out completely within the time interval (16, 18, 20, 22) of the communication cycle (14) assigned to this predefined process step (38, 40, 42, 44, 46, 48, 50, 52).

3. Data processing method according to claim 1 or 2, **characterised in that**
- during a first type of time interval (16) of the communication cycle (14) at least one of the plurality of data processing apparatuses (26, 28) is authorised to receive data; and
- during this first type of time interval (16) the input data is read in by this at least one data processing apparatus (26, 28).

4. Data processing method according to claim 3, **characterised in that**
- during the first type of time interval (16) of the communication cycle (14) the plurality of data processing apparatuses (26, 28) are authorised to receive data; and
- during this first type of time interval (16) the identical input data is read in by the plurality of data processing apparatuses (26, 28) in each case.

5. Data processing method according to one of the preceding claims,
**characterised in that** during a second type of time interval (18) of the communication cycle (14), by means of at least one of the plurality of data processing apparatuses (26, 28) input data is processed to an output dataset.

6. Data processing method according to claim 5, **characterised in that** during this second type of time interval (18), the input data is processed to an output dataset by each of the plurality of data processing apparatuses (26, 28) by means of the same deterministic data processing program.

7. Data processing method according to one of the preceding claims,
**characterised in that** during a third type of time interval (20) of the communication cycle (14), a transmission of data is exclusively restricted to a transmission between the plurality of data processing apparatuses (26, 28).

8. Data processing method according to claims 6 and 7, **characterised in that**
- during the third type of time interval (20) only a first data processing apparatus (26) of the plurality of data processing apparatuses (26, 28) is authorised to receive data and further data processing apparatuses (28) of the plurality of data processing apparatuses (26, 28) are authorised to send data; and
- during the third type of time interval (20) one output dataset is output in each case by the further data processing apparatuses (26, 28), which is read in by means of the first data processing apparatus (26).

9. Data processing method according to claims 6 and 8, **characterised in that**
- during the second type of time interval (18) a checksum of their output dataset is computed by means of the further data processing apparatuses (28); and
- during the third type of time interval (20) this checksum is output in each case by means of the further data processing apparatuses (28), wherein this checksum is output by a part of the further data processing apparatuses (28) instead of the output dataset.

10. Data processing method according to claim 9, **characterised in that**
- during a fourth type of time interval (22) of the communication cycle (14), exclusively the first data processing apparatus (26) is authorised to send data; and
- during the fourth type of time interval (22) by means of the first data processing apparatus (26), its own output dataset is compared with at least one output dataset read in or a checksum of its own output dataset is compared with the checksums read in.

11. Data processing method according to claim 10, **characterised in that**
in the case of a match between its own output dataset and the at least one output dataset read in or in the case of a match between the checksum of its own output dataset and the checksums read in during the fourth type of time interval (22), its own output dataset is output by the first data processing apparatus (26).

12. Data processing method according to claim 10, **characterised in that** in the case of a deviation between its own output dataset and an output dataset read in or in the case of a deviation between the checksum of its own output dataset and a checksum of the checksums read in, such an output dataset that matches the at least one further output dataset read in or of which the checksum matches at least a further checksum is output by the first data processing apparatus (26).

13. System for carrying out the data processing method according to one of the preceding claims, having
- a network (10), which is configured to transmit data between various network subscribers of the network in accordance with a communication cycle (14) consisting of consecutive time intervals (16, 18, 20, 22, 24) defined in a communication scheme (12);
- a plurality of data processing apparatuses (26, 28), which are each embodied as a network subscriber and which are each configured to read in, to process and/or to output at least a part of the data in a process cycle (34, 36) consisting of consecutive process steps (38, 40, 42, 44, 46, 48, 50, 52); in which
- predefined network subscribers of the network (10) are each able to be authorised to send or to receive the data during one or more of predefined time intervals (16, 18, 20, 22, 24);
- the communication cycle (14) is synchronised with the process cycle (34, 36) of at least one of the plurality of data processing apparatuses (26, 28) in such a way that, during a time in which the communication cycle (14) is executing, a predefined process step (38, 40, 42, 44, 46, 48, 50, 52) of the process cycle (34, 36) of the at least one of the plurality of data processing apparatuses (26, 28) is able to be carried out during a time interval (16, 18, 20, 22) of the communication cycle (14) assigned to this predefined process steps (38, 40, 42, 44, 46, 48, 50, 52); and
- there is provision for the communication cycle (14) and the process cycle (34, 36) of the said at least one of the plurality of data processing apparatuses (26, 28) to be executed multiple times.

14. Computer program product, containing machine-readable instructions, which cause the system according to claim 13 to carry out a data processing method according to one of claims 1 to 12.

## Revendications

1. Procédé de traitement de données, dans lequel
- on transmet des données entre des participants différents d'un réseau (10) suivant un cycle (14) de communication fixé dans un schéma (12) de communication et composé de laps de temps (16, 18, 20, 22, 24) successifs ;
- pendant au moins un laps de temps (16, 18, 20, 22, 24) du cycle (14) de communication, on autorise des participants du réseau déterminés à l'avance respectivement soit à émettre, soit à recevoir des données ;
- on prévoit plusieurs dispositifs (26, 28) de traitement de données comme participants du réseau ;
- on fait se dérouler respectivement un cycle (34, 36) de processus par chacun des plusieurs dispositifs (26, 28) de traitement de données ;
- dans le cycle (34, 36) de processus respectif, on exécute des stades (38, 40, 42, 44, 46, 48, 50, 52) de traitement successifs, dans lesquels on lit, traite ou émet respectivement au moins une partie des données ;
- on synchronise le cycle (14) de communication avec le cycle (34, 36) de processus d'au moins l'un des plusieurs dispositifs (26, 28) de traitement de données, de manière à exécuter, pendant un déroulement dans le temps du cycle (14) de communication, un stade (38, 40, 42, 44, 46, 48, 50, 52) de processus déterminé à l'avance du cycle (34, 36) de processus du au moins un des plusieurs dispositifs (26, 28) de traitement de données pendant un laps de temps (16, 18, 20, 22), affecté à ce stade (38, 40, 42, 44, 46, 48, 50, 52) de processus déterminé à l'avance, du cycle (14) de communication ; et
- on fait se dérouler plusieurs fois le cycle (14) de communication ainsi que le cycle (34, 36) de processus du au moins un mentionné des plusieurs dispositifs (26, 28) de traitement de données.

2. Procédé de traitement de données suivant la revendication 1,
**caractérisé en ce que** l'on exécute le stade (38, 40, 42, 44, 46, 48, 50, 52) de processus déterminé à l'avance du cycle (34, 36) de processus entièrement dans le laps de temps (16, 18, 20, 22), affecté à ce stade (38, 40, 42, 44, 46, 48, 50, 52) de processus déterminé à l'avance, du cycle (14) de communication.

3. Procédé de traitement de données suivant la revendication 1 ou 2,
**caractérisé en ce que**
- pendant un laps de temps (16) d'un premier type du cycle (14) de communication, on autorise au moins l'un des plusieurs dispositifs (26, 28) de traitement de données à recevoir des données ; et
- pendant ce laps de temps (16) du premier type, on lit des données d'entrée par ce au moins un dispositif (26, 28) de traitement de données.

4. Procédé de traitement de données suivant la revendication 3,
**caractérisé en ce que**
- pendant le laps de temps (16) du premier type du cycle (14) de communication, on autorise les plusieurs dispositifs (26, 28) de traitement de données à recevoir des données ; et
- pendant ce laps de temps (16) du premier type, des données d'entrée identiques respectivement sont lues par les plusieurs dispositifs (26, 28) de traitement de données.

5. Procédé de traitement de données suivant l'une des revendications précédentes,
**caractérisé en ce que**, pendant un laps de temps (18) d'un deuxième type du cycle (14) de communication, on transforme, au moyen d'au moins l'un des plusieurs dispositifs (26, 28) de traitement de données, des données d'entrée en un ensemble de données de sortie.

6. Procédé de traitement de données suivant la revendication 5,
**caractérisé en ce que**, pendant ce laps de temps (18) du deuxième type, on transforme par chacun des plusieurs dispositifs (26, 28) de traitement de données, au moyen de respectivement le même programme déterministe de traitement de données, les données d'entrée en un ensemble de données de sortie.

7. Procédé de traitement de données suivant l'une des revendications précédentes,
**caractérisé en ce que**, pendant un laps de temps (20) d'un troisième type du cycle (14) de communication, la transmission de données est limitée exclusivement à une transmission entre les plusieurs dispositifs (26, 28) de traitement de données.

8. Procédé de traitement de données suivant les revendications 6 et 7,
**caractérisé en ce que**,
- pendant le laps de temps (20) du troisième type, seulement un premier dispositif (26) de traitement de données, parmi les plusieurs dispositifs (26, 28) de traitement de données, est autorisé à recevoir des données et d'autres dispositifs (28) de traitement de données, parmi les plusieurs dispositifs (26, 28) de traitement de données, sont autorisés à émettre des données ; et
- pendant le laps de temps (20) du troisième type, il est émis par les autres dispositifs (26, 28) de traitement de données respectivement un ensemble de données de sortie, qui est lu au moyen du premier dispositif (26) de traitement de données.

9. Procédé de traitement de données suivant les revendications 6 et 8,
**caractérisé en ce que**
- pendant le laps de temps (18) du deuxième type, on calcule, au moyen des autres dispositifs (28) de traitement de données, respectivement une somme de contrôle à partir de leur ensemble de données de sortie ; et
- pendant le laps de temps (20) du troisième type, on émet au moyen des autres dispositifs (28) de traitement de données respectivement cette somme de contrôle, dans lequel cette somme de contrôle est émise, au lieu de l'ensemble de données de sortie, par une partie des autres dispositifs (28) de traitement de données.

10. Procédé de traitement de données suivant la revendication 9,
**caractérisé en ce que**
- pendant un laps de temps (22) d'un quatrième type du cycle (14) de communication, on autorise exclusivement le premier dispositif (26) de traitement de données à envoyer des données ; et
- pendant le laps de temps (22) du quatrième type, on compare aux sommes de contrôle lues, au moyen du premier dispositif (26) de traitement de données, son propre ensemble de données de sortie à au moins un ensemble de données de sortie lu ou à une somme de contrôle de son propre ensemble de données de sortie.

11. Procédé de traitement de données suivant la revendication 10,
**caractérisé en ce que**
dans le cas d'une coïncidence entre le propre ensemble de données de sortie et le au moins un ensemble de données de sortie lu ou dans le cas d'une coïncidence de la somme de contrôle du propre ensemble de données de sortie et de la somme de contrôle lue pendant le laps de temps (22) du quatrième type, le premier dispositif (26) de traitement de données émet son propre ensemble de données de sortie.

12. Procédé de traitement de données suivant la revendication 10,
**caractérisé en ce que**
dans le cas d'un écart entre le propre ensemble de données de sortie et un ensemble de données de sortie lu ou dans le cas d'un écart entre la somme de contrôle du propre ensemble de données de sortie et une somme de contrôle de la somme de contrôle lue, le premier dispositif (26) de traitement de données émet un ensemble de données de sortie tel, qu'il coïncide avec au moins un autre ensemble de données de sortie lu ou sa somme de contrôle avec au moins une autre somme de contrôle.

13. Système pour effectuer le procédé de traitement de données suivant l'une des revendications précédentes, comportant
- un réseau (10), qui est agencé pour transmettre des données entre des participants différents du réseau suivant un cycle (14) de communication fixé dans un schéma (12) de communication, est composé de laps de temps (16, 18, 20, 22, 24) successifs ;
- plusieurs dispositifs (26, 28) de traitement de données, qui sont constitués chacun sous la forme d'un participant de réseau et qui sont agencés chacun pour lire, traiter et/ou émettre au moins une partie des données dans un cycle (34, 36) de processus composé de stades (38, 40, 42, 44, 46, 48, 50, 52) de processus successifs ;
dans lequel
- des participants déterminés à l'avance du réseau (10) peuvent être autorisés respectivement à envoyer ou à recevoir des données pendant un ou plusieurs laps de temps (16, 18, 20, 22, 24) déterminés à l'avance ;
- le cycle (14) de communication est synchronisé avec le cycle (34, 36) de processus d'au moins l'un des plusieurs dispositifs (26, 28) de traitement de données, de manière à exécuter, pendant un déroulement dans le temps du cycle (14) de communication, un stade (38, 40, 42, 44, 46, 48, 50, 52) de processus déterminé à l'avance du cycle (34, 36) de processus du au moins un des plusieurs dispositifs (26, 28) de traitement de données pendant un laps de temps (16, 18, 20, 22), affecté à ce stade (38, 40, 42, 44, 46, 48, 50, 52) de processus déterminé à l'avance, du cycle (14) de communication ; et
- il est prévu de faire se dérouler plusieurs fois le cycle (14) de communication et le cycle (34, 36) de processus du mentionné au moins un des plusieurs dispositifs (26, 28) de traitement de données.

14. Produit de programme d'ordinateur, contenant des instructions déchiffrables par machine, qui font que le système suivant la revendication 13 exécute un procédé de traitement de données suivant l'une des revendications 1 à 12.
